# EUROPEAN PATENT APPLICATION

(11) **EP 2 056 555 A1**
(43) Date of publication of application: **06.05.2009**
(21) Application number: 07721462.5
(22) Date of filing: 15.06.2007
(51) Int. Cl.: H04L 29/06, H04L 12/24, H04L 9/32, H04M 3/493

(54) **A SYSTEM AND METHOD OF MANAGING AUTHORIZATION AND AUTHORIZATION SERVER**

(30) Priority: 11.08.2006 CN 200610115237
(71) Applicant: Huawei Technologies Co., Ltd., Longgang District Shenzhen 518129 (CN)
(72) Inventor: WANG, Rui, Guangdong 518129 (CN); ZHU, Yongsheng, Guangdong 518129 (CN)
(74) Representative: Körber, Martin Hans
(86) International application number: PCT/CN2007/001889
(87) International publication number: WO 2008/019562

(57) **Abstract**

A system of managing authorization includes a privacy owner's equipment, which is used to provide the owner's privacy; a privacy managing system, which is used to obtain the privacy information provided by the privacy owner; a privacy inquiring equipment, which is used to inquire and obtain the privacy information from the privacy managing system; and an authorization server, which is used to decide whether the privacy information would be known by the privacy inquiring equipment. When the conditions are satisfied, the privacy managing system would receive the privacy information and send it to the privacy inquiring equipment.

## Description

This application claims the priority of Chinese Patent Application No. 200610115237.X filed on August 11, 2006 and entitled "SYSTEM AND METHOD FOR AUTHORIZATION MANAGEMENT, AND AUTHORIZATION MANAGEMENT SERVER", the contents of which are incorporated herein by reference in their entireties.

### Field of the Invention

The present invention relates to the field of mobile communication, and in particular to a system and method for authorization management, and an authorization management server.

### Background of the Invention

Along with the continuous development of communication technologies, mobile communication service providers provide abundant value-added services, such as Location service and Presence service and the like. By means of the Location service, a Location service system can provide location information of a certain user to the user himself or to other users requesting the user's location. For example, when a user wants to know the location of the nearest restaurant, even if he does not know about his current location, the user may call the service center if his mobile phone has registered a Location service related service. The mobile communication network can initiate the Location service system to obtain the specific location of the user and send the location information and voice information of the user to the service center. Upon reception of the call, the service center can tell the user the address of the nearest restaurant according to the obtained location information. At present, the Location service plays an essential roll in the fields of emergency assistance, vehicle navigation and intelligent traffic, job scheduling and team management, etc. By means of Email or short messages and the like, the Presence service can provides a certain user with status of other users in contact with the user, such as information of Power-On/Power-Off, online/offline, location, emotion, etc.

During the implementation of the invention, the inventor finds during research that by way of providing information of location, status and so on of a registered service user to other users, value-added services such as the above Location service and Presence service and the like provide security safeguards, as well as individualized and customized services for the service user. In addition to obtain the satisfactory security safeguards and individualized services, a user may also want to protect his privacy. However, the privacy of the registered service user cannot be protected for the reason that his information is sometimes sent to those users that the registered service user does not want to release his information to.

### Summary of the Invention

Embodiments of the invention provide a system and method for authorization management, and an authorization management server, to effectively protect the privacy information of a service user.

An embodiment of the invention provides a system for authorization management, including:
a privacy owner terminal, adapted to provide a privacy owner's privacy;
a privacy management system, adapted to obtain the privacy owner's privacy provided by the privacy owner terminal;
a privacy inquiring terminal, adapted to inquire the privacy owner's privacy from the privacy management system and obtain the privacy inquirer's privacy provided by the privacy management system; and
an authorization management server, adapted to determine, according to a predetermined privacy permission rule, whether to permit a privacy inquirer to obtain the privacy owner's privacy when the privacy inquirer inquires the privacy owner's privacy via the privacy inquiring terminal, and send, if a result of permission is permit, the result to the privacy management system,
wherein the privacy management system provides the privacy inquiring terminal with the privacy owner's privacy if the result of permission sent by the authorization management server is permit.

An embodiment of the invention provides a method for authorization management, including:
determining a privacy permission rule of a privacy owner;
identifying information contained in a privacy inquiring request; and
determining, according to the privacy permission rule and the identified information, whether to release information of the privacy owner's privacy.

An embodiment of the invention provides an authorization management server, including:
a permission rule storing unit, adapted to store a privacy permission rule of a privacy owner;
an information identifying unit, adapted to identify information contained in a privacy inquiring request and provide a permission inquiring unit with the identified information; and
the permission inquiring unit, adapted to obtain, according to the information provided by the information identifying unit and the privacy permission rule stored in the permission rule storing unit, a result of permission of privacy.

In the embodiments of the invention, by setting a privacy permission rule for a privacy owner, it can be determined according to the privacy permission rule whether a privacy inquirer is permitted to obtain the privacy owner's privacy when the privacy inquirer inquires the privacy owner's privacy. The privacy owner's privacy is provided to the privacy inquirer only when the privacy inquirer is permitted, and other inquirers that are not permitted cannot obtain the information, thereby effectively ensuring the privacy owner's privacy.

### Brief Description of the Drawings

Figure 1 is a structural diagram of a system for authorization management according to an embodiment of the invention;

Figure 2 is a flow chart of a method for authorization management according to an embodiment of the invention;

Figure 3 is a flow chart of an embodiment 1 of a method for authorization management according to an embodiment of the invention;

Figure 4 is a flow chart of an embodiment 2 of a method for authorization management according to an embodiment of the invention;

Figure 5 is a flow chart for setting a right for a permission rule setter by an administrator according to an embodiment of the invention; and

Figure 6 is a structural diagram of an authorization management server according to an embodiment of the invention.

### Detailed Description of the Embodiments

Embodiments of the invention provide a basic concept for solving the problem that the current Location service, Present service and the like cannot effectively ensure privacy of service users. In other words, a privacy permission rule is set for a service user to control to which user the service user's privacy can be permitted to be released, thus to effectively protect the service user's privacy.

In the embodiments of the invention, "privacy" mainly refers to target attributes of a user, including information of identity identification, Location information, Presence information, other individual data, and data defined by an application program (information of clock, date and the like), preferred device and capability, etc.

Before detailed description regarding the technical solutions of the embodiments of the invention, the privacy permission rule is described first. As shown in the following table, the privacy permission rule includes the following contents:

| privacy owner | privacy type | contact details | privacy inquirer |
|---|---|---|---|
| | | | |

Specifically, a privacy owner refers to a service user who registers the above-described Location service, Presence service and the like, and may be indicated by a user name or contact details.

A privacy type refers to a type of privacy to be protected for the privacy owner, such as location information, power-on information and the like. Each privacy owner may have a plurality of different privacy types.

A privacy inquirer refers to the privacy inquirer that a certain type of privacy of the privacy owner is permitted to be released to, and may be indicated by a user name or contact details or by an identifier of a certain web site.

Each privacy type of a privacy owner has corresponding contact details, and the contact details may be in a form of a phone number, an Email and the like. For the reason that the contact details can be stored in an authorization management server together with information of a user name, a user identifier and the like, the contact details are optional in the privacy permission rule.

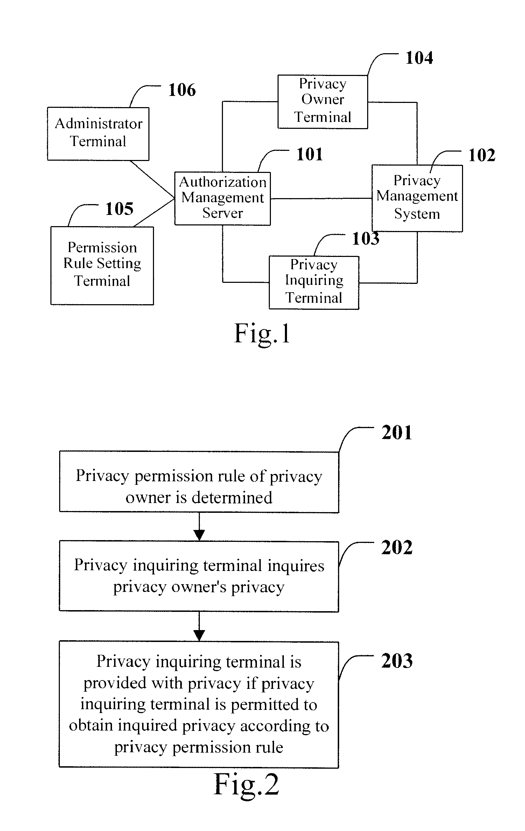

The technical solutions of the embodiments of the invention are described in detail in the following. With reference to Figure 1, a system for authorization management according to an embodiment of the invention includes:

An authorization management server 101, adapted to obtain, according to a predetermined privacy permission rule, a result of permission of whether to permit a privacy inquirer to obtain the privacy owner's privacy when the privacy inquirer inquires the privacy owner's privacy, and provide, if the result is permit, the result to a privacy management system 102.

Specifically, the authorization management server 101 is adapted to identify, upon reception of a privacy inquiring request sent by the privacy management system 102 or upon interception of a privacy inquiring request sent by a privacy inquiring terminal 103 to the privacy management system 102, information of a privacy type, information of a privacy inquirer and information of a privacy owner contained in the request, and obtain, according to the predetermined privacy permission rule, the result of permission of whether to permit the privacy inquirer to obtain the privacy owner's privacy of the type.

The authorization management server 101 is further adapted to provide the privacy management system 102 with the result or directly notify privacy request failure to the privacy inquiring terminal 103 if the result of permission is refusal.

The privacy management system 102, adapted to obtain the privacy owner's privacy provided by the privacy owner terminal 104; and further adapted to send the privacy owner's privacy to the privacy inquiring terminal 103 if the result of permission provided by the authorization management server 101 is permit.

The privacy management system 102 is further adapted to inquire the result of permission of privacy from the authorization management server 101 when the privacy inquiring terminal 103 inquires the privacy owner's privacy from the privacy management system.

In addition, the privacy management system 102 is further adapted to notify privacy inquiring request failure to the privacy inquiring terminal 103 if the result of permission provided by the authorization management server 101 to the privacy management system is refusal.

The privacy management system 102 may be a Location service system, a Presence service system, or other privacy service related systems.

The privacy inquiring terminal 103, adapted to send the privacy inquiring request to the privacy management system 102; and further adapted to receive the privacy owner's privacy provided by the privacy management system 102 if it is permitted to obtain the inquired privacy.

The privacy inquiring terminal 103 is further adapted to receive a notification of privacy inquiring request failure returned by the privacy management server 101 or the privacy management system 102 if it is refused to obtain the inquired privacy.

The privacy owner terminal 104, adapted to provide the privacy management system 102 with the privacy owner's privacy.

The system further includes:

A permission rule setting terminal 105, adapted to set, in the authorization management server 101, the privacy permission rule of the privacy owner. The authorization management server 101 is further adapted to notify the privacy owner terminal 104 of the privacy permission rule having been set.

An administrator terminal 106, adapted to set, in the authorization management server 101, a right of a permission rule setter. The authorization management server 101 is further adapted to store information of the right set by an administrator for the permission rule setter, and notify the permission rule setting terminal 105 of the information of the right.

Figure 2 is a flow chart of a method for authorization management according to an embodiment of the invention, which includes the following steps:
201: A privacy permission rule of a privacy owner is determined;
202: A privacy inquiring terminal inquires the privacy owner's privacy; and
203:The privacy inquiring terminal is provided with the privacy if the privacy inquiring terminal is permitted to obtain the inquired privacy according to the privacy permission rule.

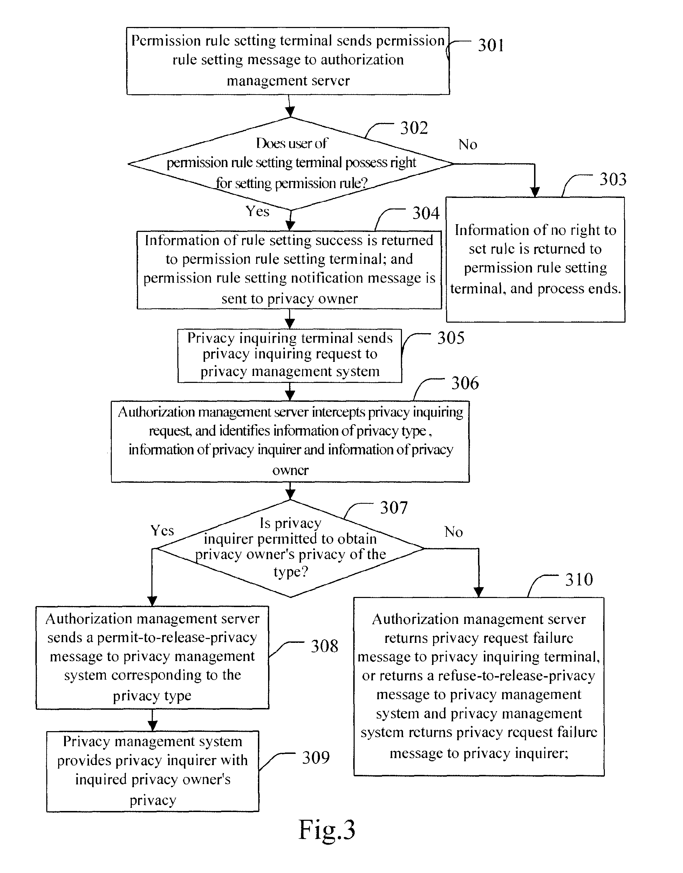

In the following, a method for authorization management according to an embodiment of the invention is described with reference to Figure 3. In the embodiment, a privacy inquirer sends a privacy inquiring request to the privacy management system. The authorization management server intercepts the request, identifies information of a service type, information of a privacy inquirer and information of a privacy owner, and obtains information of a privacy type according to the information of the service type. Then, the authorization management server determines, according to a privacy permission rule, whether to permit the privacy inquirer to obtain the privacy owner's privacy of the type, and provides the privacy management system with the result of permission. Specifically, the method includes the following steps:

Step 301: A permission rule setting terminal sends a permission rule setting message to the authorization management server, where a privacy permission rule and information for right confirmation are contained in the message.

Specifically, the information for right confirmation of the permission rule setting terminal may include the following two kinds: one is identity information of the permission rule setter, including a user name and a password; and another is a user identifier randomly assigned to the permission rule setter by the authorization management server after the permission rule setting terminal logs in the authorization management server through a user name and a password and before setting the permission rule in the authorization management server.

The privacy permission rule includes information of a privacy owner, information of a privacy type and information of a privacy inquirer. Specifically, the information of a privacy owner may be a user name or contact details of the privacy owner. The privacy permission rule may be a set of rules corresponding to one privacy owner, or multiple sets of rules corresponding to a plurality of privacy owners.

Step 302: If the authorization management server determines, according to the information for right confirmation, that the user of the permission rule setting terminal possesses the right for setting the permission rule, the process proceeds to Step 304; otherwise, the process proceeds to Step 303.

Step 303: The authorization management server returns to the permission rule setting terminal information of no right to set a rule, and the process ends.

Step 304: The authorization management server stores the privacy permission rule, returns to the permission rule setting terminal information of rule setting success, and sends, through the contact details of the privacy owner, to the privacy owner a permission rule setting notification message, where the information of the privacy type and the information of the privacy inquirer are contained in the message, so as to notify the privacy owner that his privacy of the privacy type is releasable to the privacy inquirer.

The privacy owner may provide his contact details to the authorization management server by logging in the server. If the contact details of the privacy owner are used to represent the privacy owner when the permission rule setting terminal sends the permission rule setting message to the authorization management server, the authorization management server already has the privacy owner's contact details, thus there is no need for the privacy owner to log in the authorization management server.

Step 305: A privacy inquiring terminal sends a privacy inquiring request to the privacy management system, where the information of the privacy inquirer, the information of the service type and the information of the privacy owner are contained in the privacy inquiring request.

Step 306: The authorization management server intercepts the privacy inquiring request, and identifies the information of the privacy type, the information of the privacy inquirer and the information of the privacy owner from the privacy inquiring request.

For the reason that the information of the service type is contained in the privacy inquiring request sent by the privacy inquiring terminal, and the service type corresponds to a privacy type, thus when identifying the privacy inquiring request, the authorization management server can obtain the information of the inquired privacy type from the information of the service type contained in the request.

Step 307: If the privacy inquirer is permitted to obtain the privacy owner's privacy of the type according to the privacy permission rule, the process proceeds to Step 308; otherwise, the process proceeds to Step 310.

Specifically, the process of determining whether the privacy inquirer is permitted to obtain the privacy owner's privacy of the type is implemented through the following steps:
finding, in the privacy permission rule, the privacy owner that is identical to or corresponding to the information of the privacy owner in the inquiring request;
finding, in the permission rule of the privacy owner, a privacy type that is identical to the privacy type in the inquiring request;
finding, under such a privacy type, whether there is information that is identical to the information of the privacy inquirer in the inquiring request. If the information of the privacy inquirer is recorded under the privacy type, the privacy inquirer is permitted to obtain the privacy owner's privacy of the type; otherwise, the privacy inquirer is not permitted.

Step 308: The authorization management server sends a permit-to-release-privacy message to the privacy management system corresponding to the privacy type, where the information of the privacy inquirer and the information of the privacy owner are contained in the message.

Step 309: The privacy management system provides the privacy inquirer with the inquired privacy owner's privacy, and the process ends.

Step 310: The authorization management server returns a privacy request failure message to the privacy inquiring terminal, or the authorization management server returns a refuse-to-release-privacy message to the privacy management system and the privacy management system returns a privacy request failure message to the privacy inquirer, where the privacy request failure message may contain the information of the privacy owner and the privacy type, and may further contain the reason of the request failure.

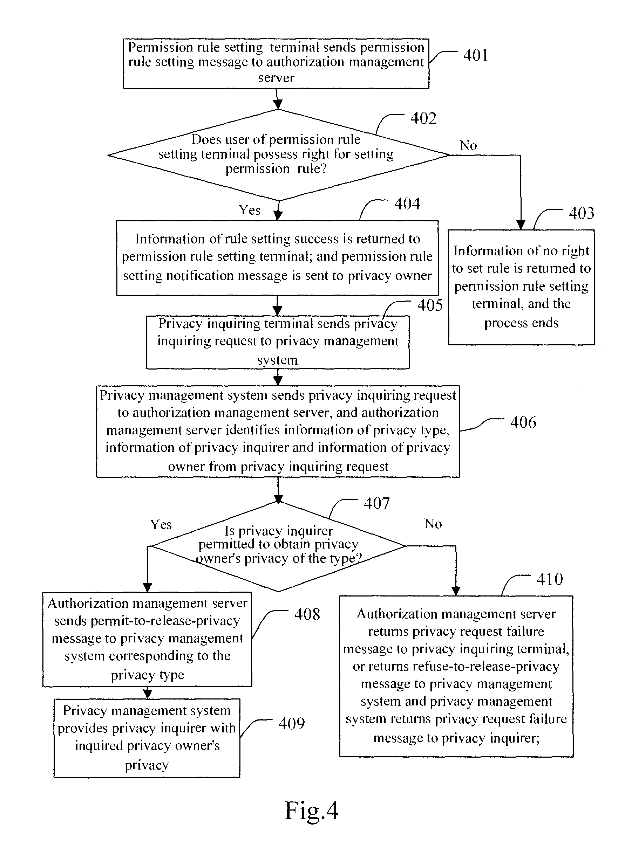

In an embodiment of the invention, a privacy inquirer sends a privacy inquiring request to the privacy management system, and the privacy management system inquires the result of permission of privacy from the authorization management server. The authorization management server identifies information of a privacy type, information of a privacy inquirer and information of a privacy owner from the privacy inquiring request, then determines whether the privacy inquirer is permitted to obtain the privacy owner's privacy of the type according to the privacy permission rule, and provides the result of permission to the privacy management system. With reference to Figure 4, the embodiment specifically includes the following steps.

Step 401: A permission rule setting terminal sends a permission rule setting message to the authorization management server, where a privacy permission rule and information for right confirmation are contained in the message.

Specifically, the information for right confirmation of the permission rule setter may include the following two kinds: one is identity information of the permission rule setter, including a user name and a password; and another is a user identifier randomly assigned to the permission rule setter by the authorization management server after the permission rule setting terminal logs in the authorization management server through a user name and a password and before setting the permission rule in the authorization management server.

The privacy permission rule includes information of a privacy owner, information of a privacy type and information of a privacy inquirer. Specifically, the information of a privacy owner may be a user name or contact details of the privacy owner.

Step 402: If the authorization management server determines, according to the information for right confirmation, that the user of the permission rule setting terminal possesses the right for setting the permission rule, the process proceeds to Step 404; otherwise, the process proceeds to Step 403.

Step 403: The authorization management server returns to the permission rule setting terminal information of no right to set a rule, and the process ends.

Step 404: The authorization management server stores the privacy permission rule, returns to the permission rule setting terminal information of rule setting success, and sends, through the contact details of the privacy owner, to the privacy owner a permission rule setting notification message, where the information of the privacy type and the information of the privacy inquirer are contained in the message, so as to notify the privacy owner that his privacy of the privacy type is releasable to the privacy inquirer.

The privacy owner may provide his contact details to the authorization management server by logging in the server. If the contact details of the privacy owner are used to represent the privacy owner when the permission rule setting terminal sends the permission rule setting message to the authorization management server, the authorization management server already has the privacy owner's contact details, thus there is no need for the privacy owner to log in the authorization management server.

Step 405: A privacy inquiring terminal sends a privacy inquiring request to the privacy management system, where the information of the privacy inquirer and the information of the privacy owner are contained in the privacy inquiring request.

Step 406: The privacy management system sends the privacy inquiring request to the authorization management server, where the information of the privacy inquirer, the privacy type and the information of the privacy owner are contained in the request. The authorization management server identifies the above information from the privacy inquiring request.

Step 407: If the privacy inquirer is permitted to obtain the privacy owner's privacy of the type according to the privacy permission rule, the process proceeds to Step 408; otherwise, the process proceeds to Step 410.

Specifically, the process of determining whether the privacy inquirer is permitted to obtain the privacy owner's privacy of the type is implemented through the following steps:
finding, in the privacy permission rule, the privacy owner that is identical to or corresponding to the information of the privacy owner in the inquiring request;
finding, in the permission rule of the privacy owner, a privacy type that is identical to the privacy type in the inquiring request;
finding, under such a privacy type, whether there is information that is identical to the information of the privacy inquirer in the inquiring request. If the information of the privacy inquirer is recorded under the privacy type, the privacy inquirer is permitted to obtain the privacy owner's privacy of the type; otherwise, the privacy inquirer is not permitted.

Step 408: The authorization management server sends a permit-to-release-privacy message to the privacy management system corresponding to the privacy type, where the information of the privacy inquirer and the information of the privacy owner are contained in the message.

Step 409: The privacy management system provides the privacy inquirer with the inquired privacy owner's privacy, and the process ends.

Step 410: The authorization management server returns a privacy request failure message to the privacy inquiring terminal, or the authorization management server returns a refuse-to-release-privacy message to the privacy management system and the privacy management system returns a privacy request failure message to the privacy inquirer, where the privacy request failure message may contain the information of the privacy owner and the privacy type, and may further contain the reason of the request failure.

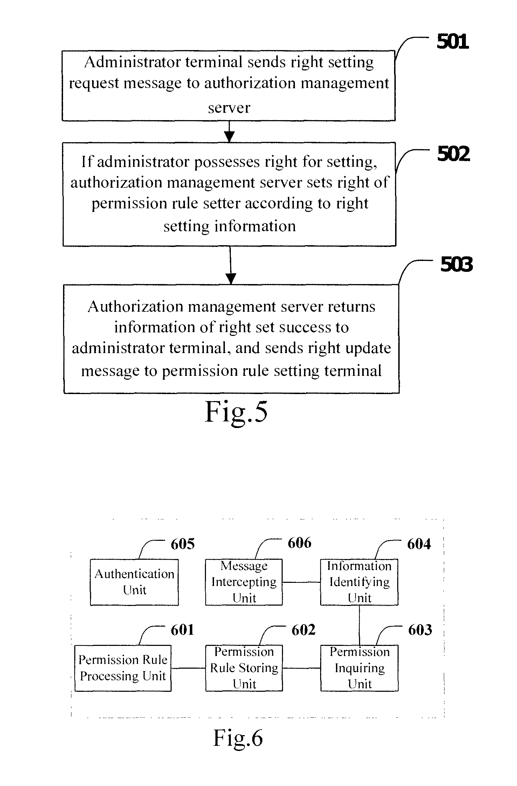

Before the permission rule setter sets the permission rule in the authorization management server, an administrator may set the right of the permission rule setter. In the following, the process for the administrator to set the right for the permission rule setter is described in detail with reference to Figure 5.

Step 501: An administrator terminal sends a right setting request message to the authorization management server, where information for right confirmation, right setting information and information of the permission rule setter are contained in the message.

The right setting information may be information of a privacy owner that is added into a list of management objects of the permission rule setter, or information of a privacy owner that is deleted from the management objects of the permission rule setter, and may also be information of a privacy type managed by the permission rule setter together with information of a privacy owner that are added into the list of the management objects, and so on.

Specifically, the information for right confirmation of the administrator may include the following two kinds: one is identity information of an administrator, including a user name and a password; and another is a user identifier randomly assigned to the administrator by the authorization management server after the administrator logs in the authorization management server through a user name and a password and before sending the right setting request message to the authorization management server.

Step 502: If the administrator possesses the right for setting the right for the permission rule setter according to the information for right confirmation, the authorization management server sets the right of the permission rule setter according to the right setting information.

Step 503: The authorization management server returns to the administrator terminal information of right setting success, and sends a right update message to a permission rule setting terminal to provide the permission rule setting terminal with the updated information of right.

In the above embodiments, the functions of the administrator terminal, the permission rule setting terminal and the privacy owner terminal can be integrated in the same terminal. When a user of the terminal logs in the authorization management server through a user name and a password, the authorization management server can further return information of right to the user according to the user name and the password. Through the information of right, the terminal provides the user with corresponding operation capabilities. If the returned information of right indicates that the user of the terminal is an administrator, an application program for the administrator is provided. If the returned information of right indicates that the user of the terminal is a permission rule setter, an application program for setting permission rule is provided.

As shown in Figure 6, an embodiment of the invention further provides an authorization management server, which includes:

a permission rule processing unit 601, adapted to authenticate the identity of a permission rule setter upon reception of a permission rule setting message, and record the privacy permission rule contained in the message into a permission rule storing unit 602 if it is determined that the permission rule setter possesses the right for setting a permission rule,

where the permission rule processing unit 601 is further adapted to authenticate the identity of an administrator upon reception of a right setting request message, and update in the permission rule storing unit 602 the right of the permission rule setter if it is determined that the administrator possesses the right for setting the right of the permission rule setter, and

information for right confirmation may be a user name and a password of a user, and may also be a user identifier randomly assigned by an authentication unit 605;

the permission rule storing unit 602, adapted to store the privacy permission rule of a privacy owner, and further adapted to store information of the right set for the permission rule setter by the administrator;

a permission inquiring unit 603, adapted to provide an information identifying unit 604 with a privacy inquiring request containing information of a privacy type, information of a privacy owner and information of a privacy inquirer upon reception of a inquiring request, and further adapted to obtain a result of permission of privacy according to the information of the privacy type, the information of the privacy owner and the information of the privacy inquirer provided by the information identifying unit 604 and the privacy permission rule stored in the permission rule storing unit 602;

the information identifying unit 604, adapted to identify the information of the privacy type, the information of the privacy owner and the information of the privacy inquirer from the privacy inquiring request provided by the permission inquiring unit 603, and return the identified information to the permission inquiring unit 603,

where the information identifying unit 604 and the permission inquiring unit 603 can physically be configured separately from or integrated with each other; and

the authentication unit 605, adapted to store user information such as login information of the user, right of the user and the like; and further adapted to allow identity authentication and return to the user terminal the randomly assigned user identifier and the information of right if the login information provided by the user during login is consistent with the stored login information.

The authorization management server further includes:

a message intercepting unit 606, adapted to intercept a privacy inquiring request sent by a privacy inquiring terminal; and further adapted to send the inquiring request to the information identifying unit 604,

where the information identifying unit 604 is further adapted to identify information of a service type, information of a privacy owner and information of a privacy inquirer from the privacy inquiring request provided by the message intercepting unit 606, and obtain the information of a privacy type according to a stored corresponding relationship between the information of the service type and the information of the privacy type, and is further adapted to submit the information of the privacy type, the information of the privacy owner and the information of the privacy inquirer to the permission inquiring unit 603.

A specific implementation example that the embodiment of the invention is applied in team management is shown below. Specifically, King is an administrator of a company, and is responsible for setting the right of Alice. Alice is a department manager of a certain department of the company, and is responsible for setting privacy permission rules for Bob, Chris and David who are managed by Alice. Bob, Chris and David are on-site maintenance engineers having wireless terminals with positioning functions. Joe inquires information of Bob, Chris and David through an application program named "CSS.com". The specific steps are as follows:

S1: King provides a user name and a password to log in an authorization management server.

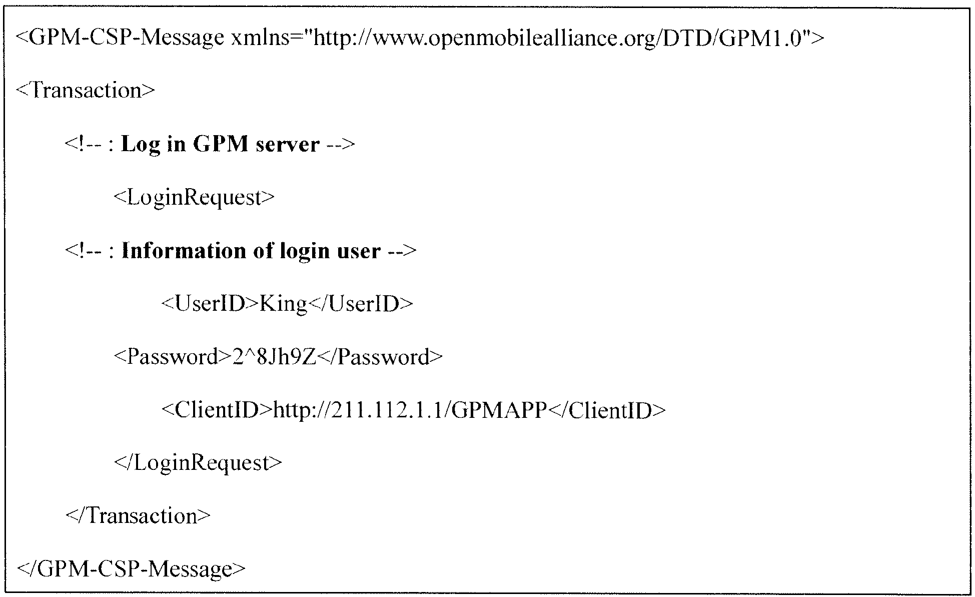

S2: The authorization management server carries out identity authentication for King according to the user name and the password, determines that he is an administrator, and returns a login response message to King, where a user identifier randomly assigned to King is contained in the message.

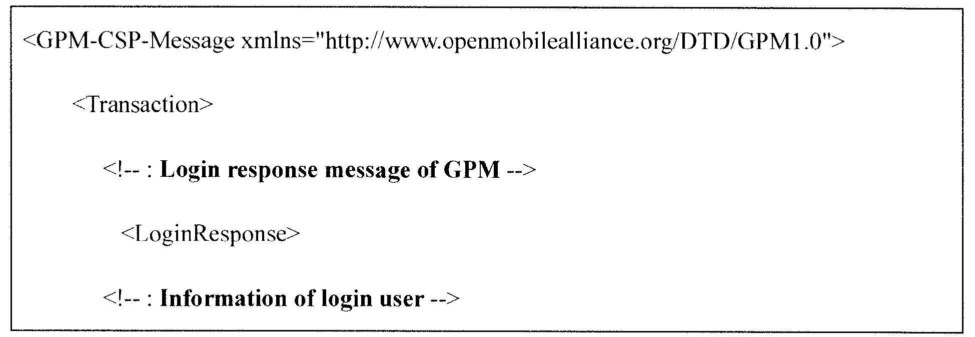

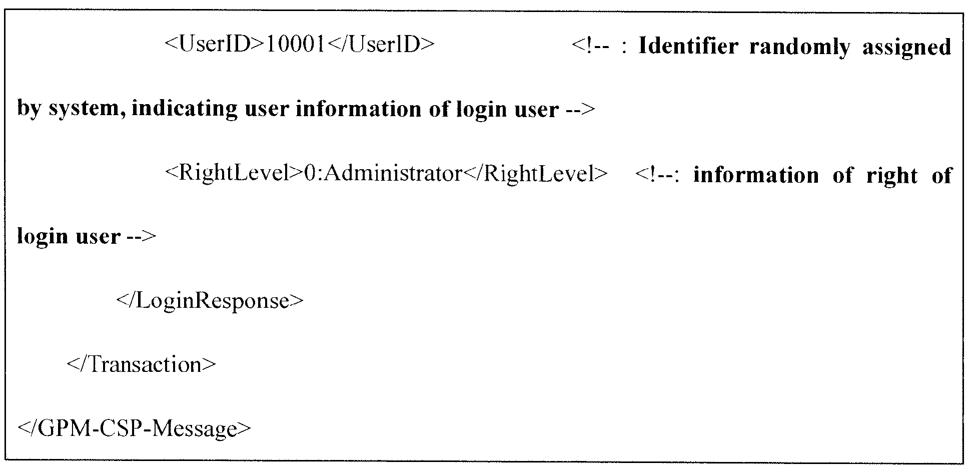

S3: The client terminal of King records the user identifier of King upon reception of the login response message, and opens an administrator's menu application for King. King sends a right setting request message to the authorization management server to assign a right for Alice. The message contains the user identifier assigned during login, information of the permission rule setter, and information of the privacy owners managed by the permission rule setter.

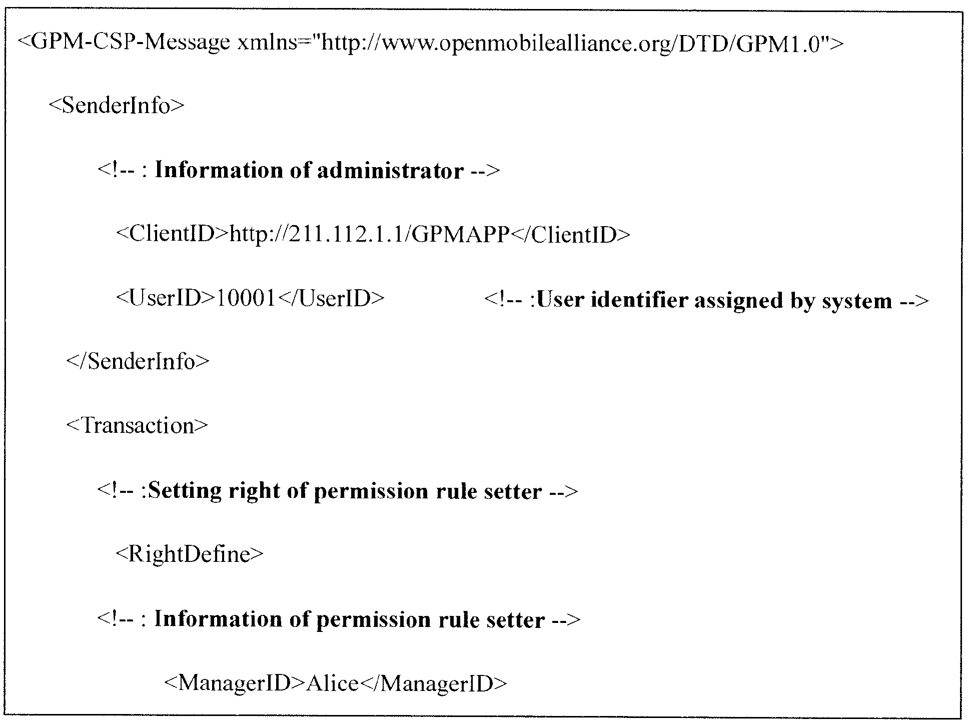

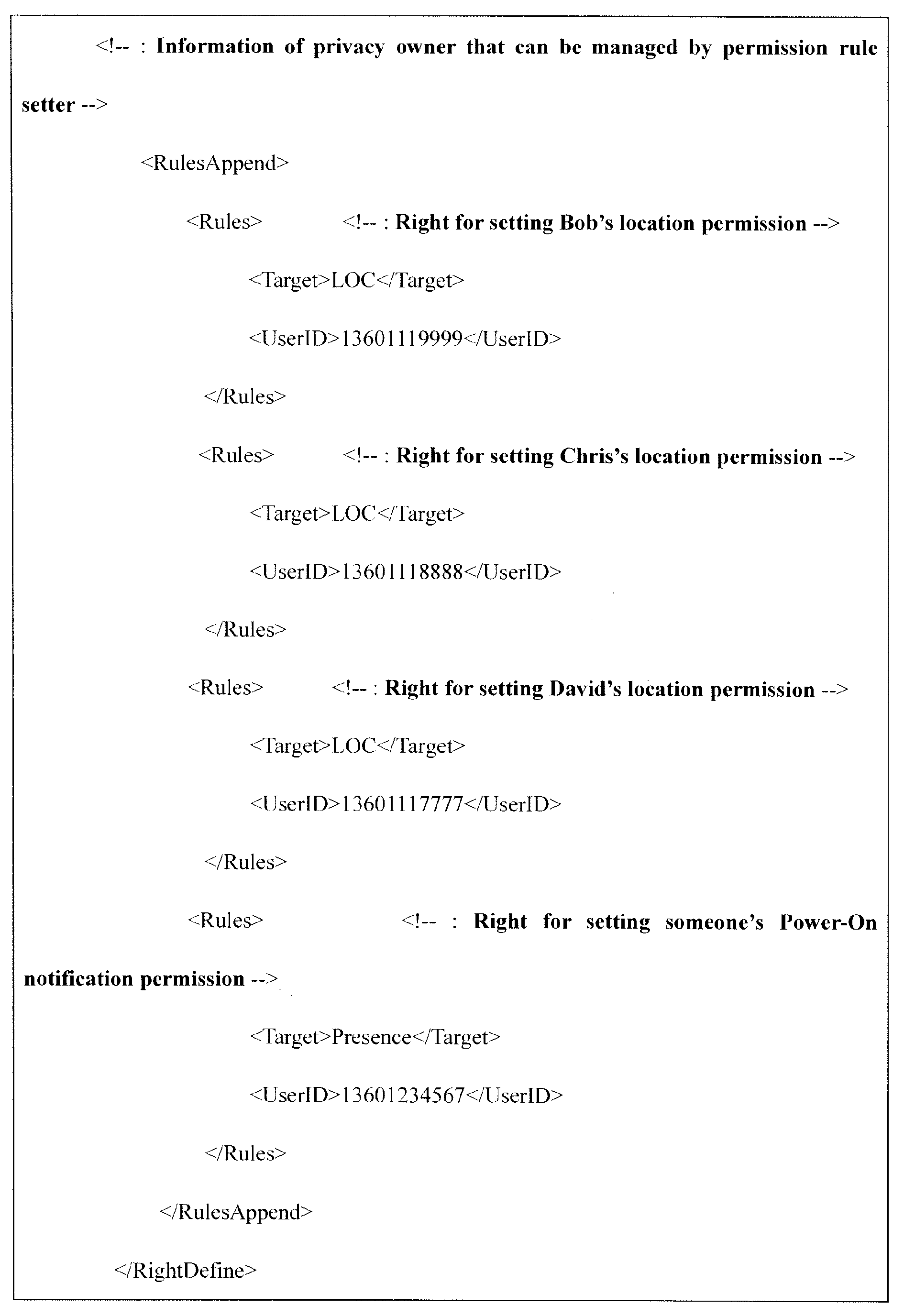

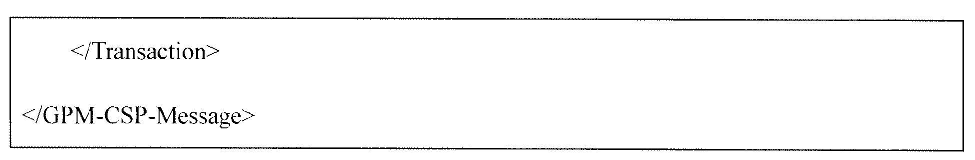

S4: The authorization management server carries out identity authentication for King according to the user identifier contained in the right setting request message. If his administrator identity is determined, the authorization management server knows, according to the information of the permission rule setter contained in the request message, that it is the right of Alice that is to be set, and adds newly-added management objects into the list of the management objects of Alice.

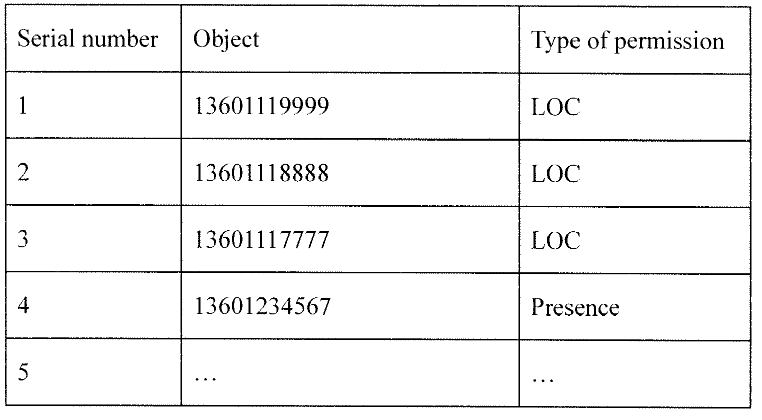

S5: Alice provides a user name and a password to log in the authorization management server.

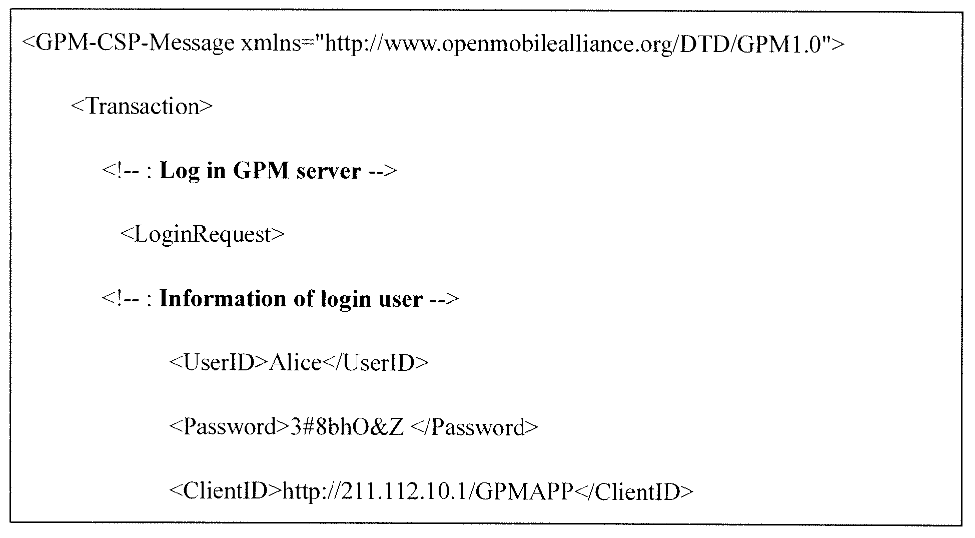

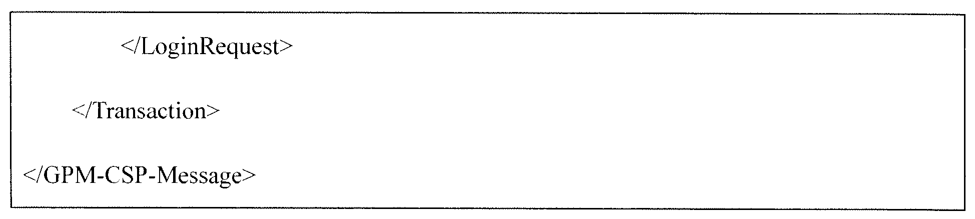

S6: The authorization management server carries out identity authentication for Alice according to the user name and the password, determines that Alice is a permission rule setter, and returns a login response message to Alice, where a user identifier randomly assigned to Alice is contained in the message.

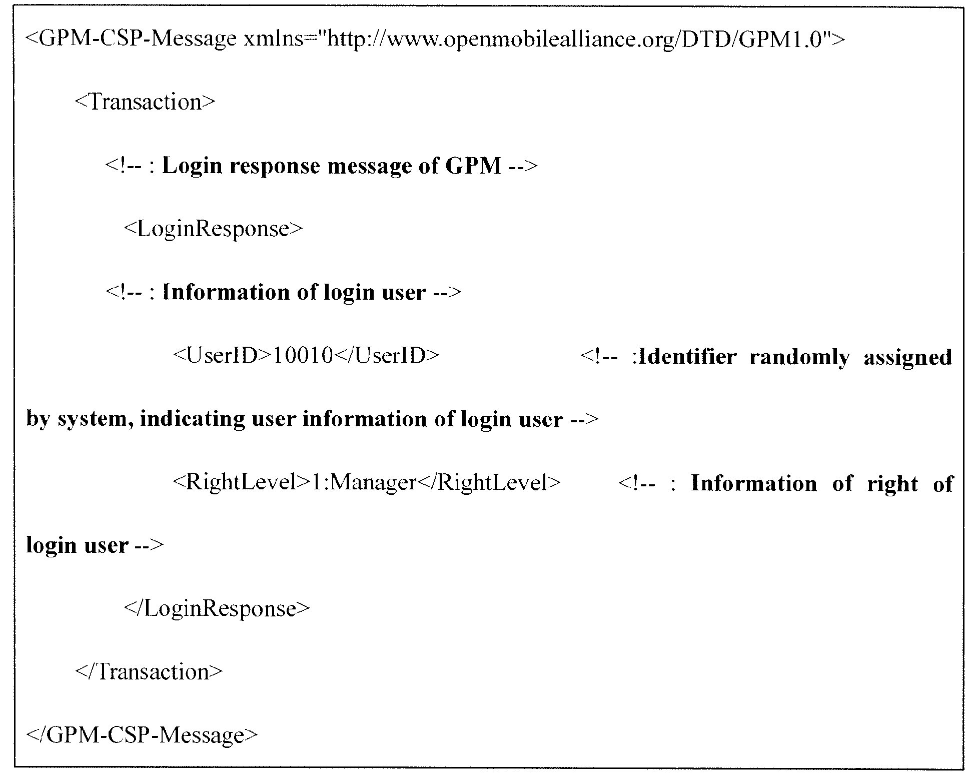

S7: The authorization management server sends to Alice information of the privacy owners newly added for her by King.

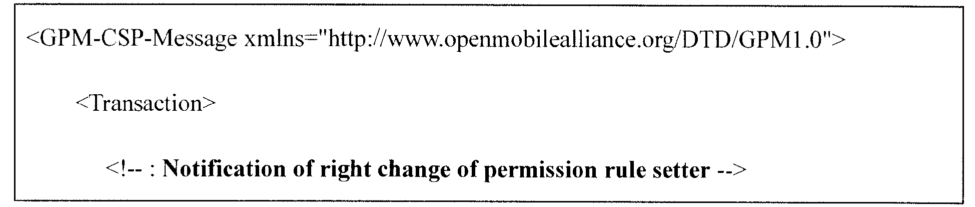

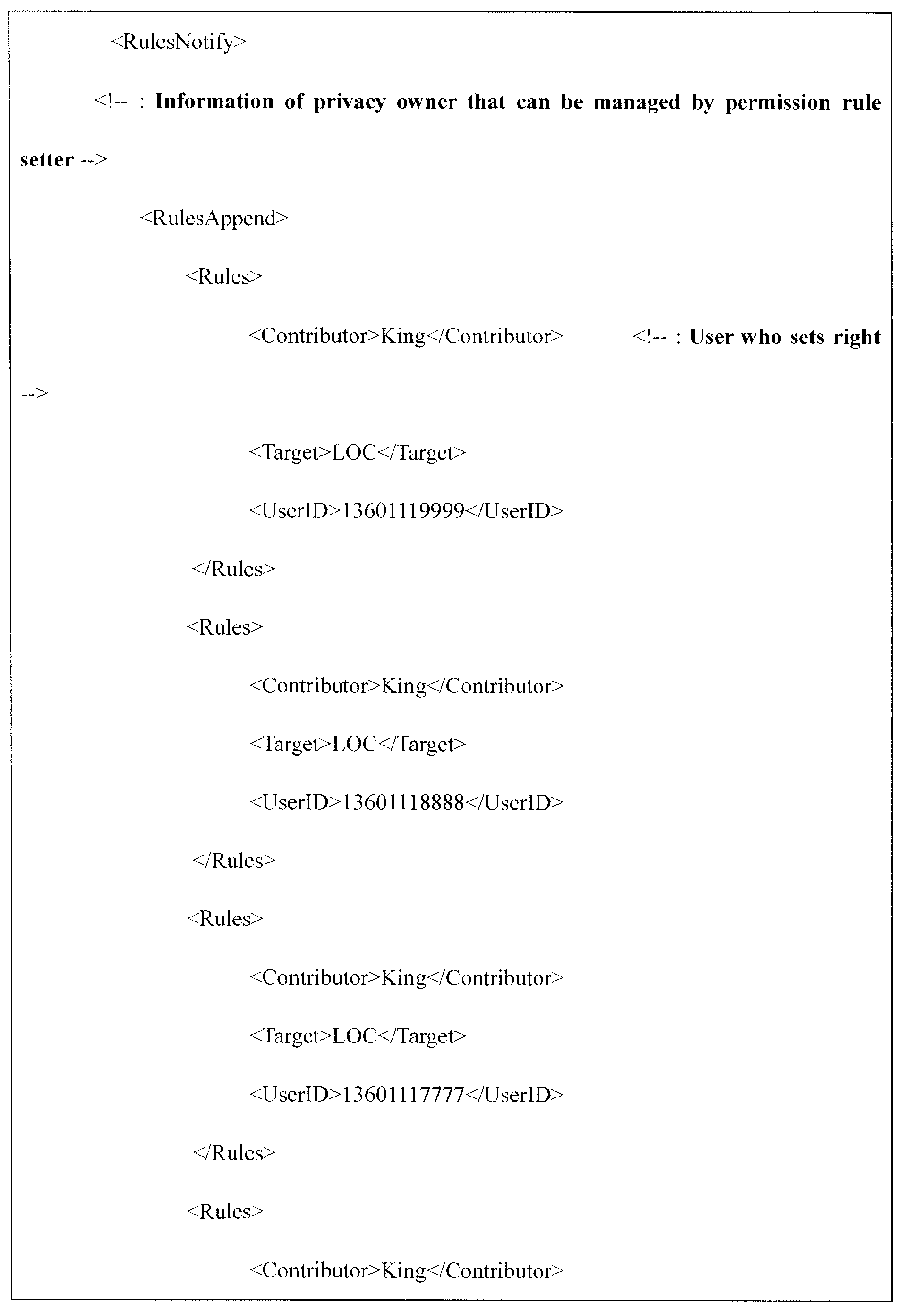

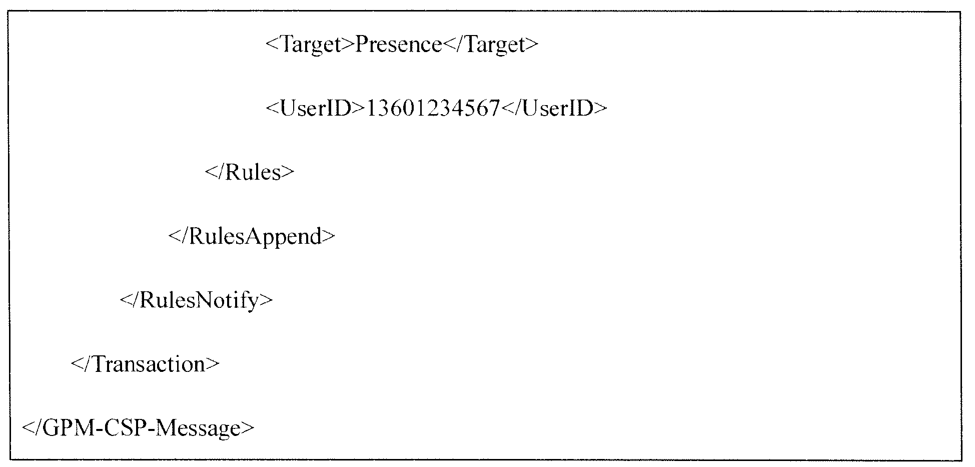

S8: The client terminal of Alice records the user identifier of Alice upon reception of the login response message, and opens a permission rule setter's menu and application for Alice. Alice sets the permission rules of her management objects and sends them to the authorization management server.

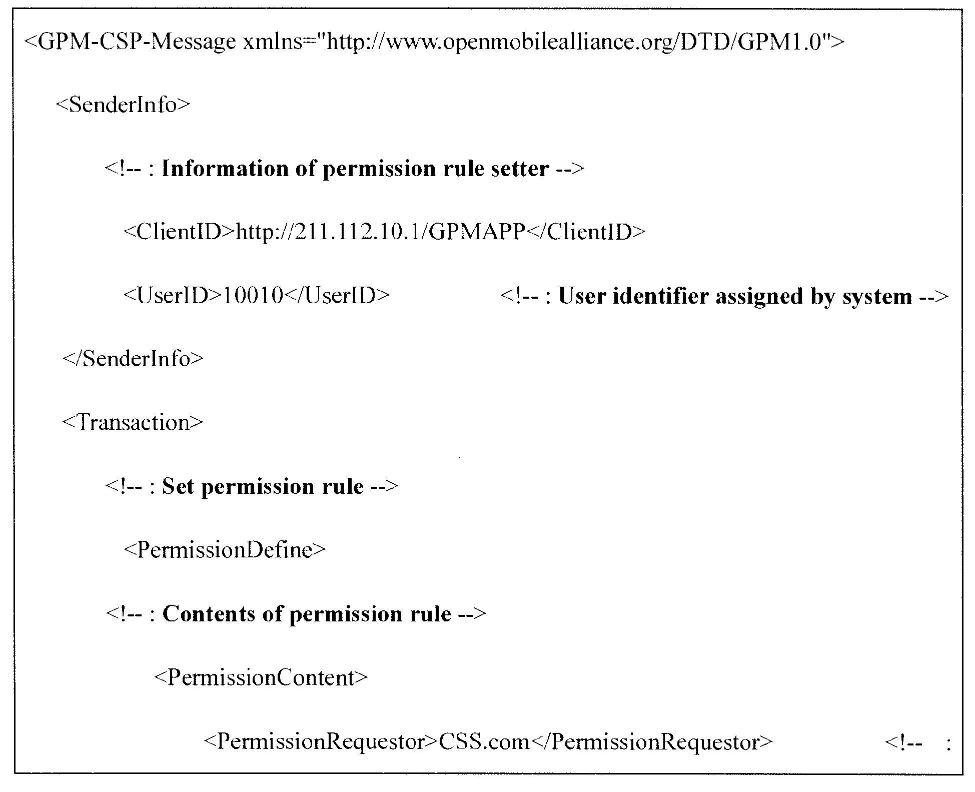

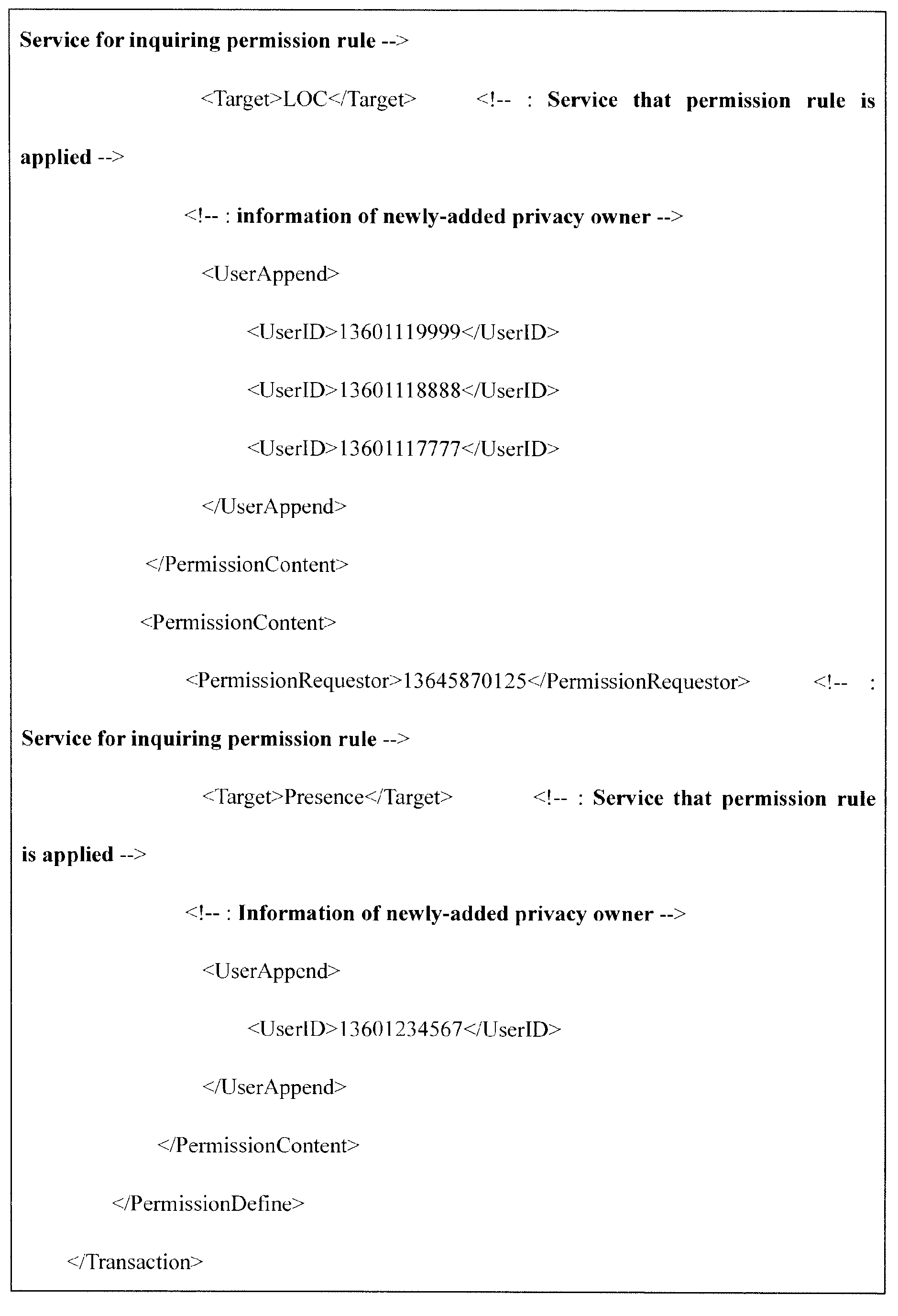

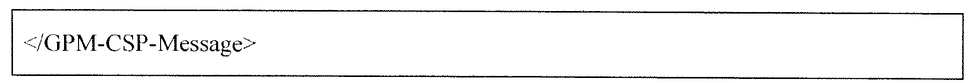

S9: Upon reception of the message, the authorization management server records the above information into respective tables of permission rules of Bob, Chris and David. Bob is taken as an example:

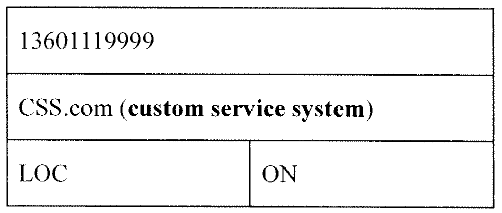

S10: The authorization management server notifies the user of the newly-added permission rule. In a case that the user' phone number is stored in the server, the user can be notified by a piece of short message.

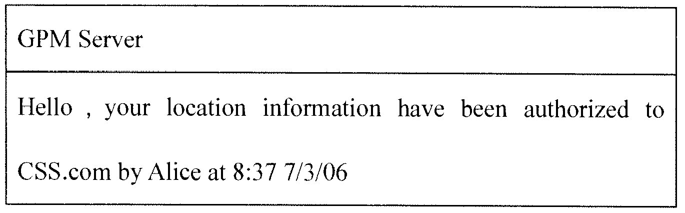

S11: Joe receives an on-site maintenance notification ticket, opens the custom service system (CSS) and clicks the "Inquire Location" button. Software of the custom service system inquires the location information of Bob, Chris and David from a location server.

S12: Upon reception of the inquiring message from the custom service system, the location server inquires the permission rule from the authorization management server and sends a rule inquiring message.

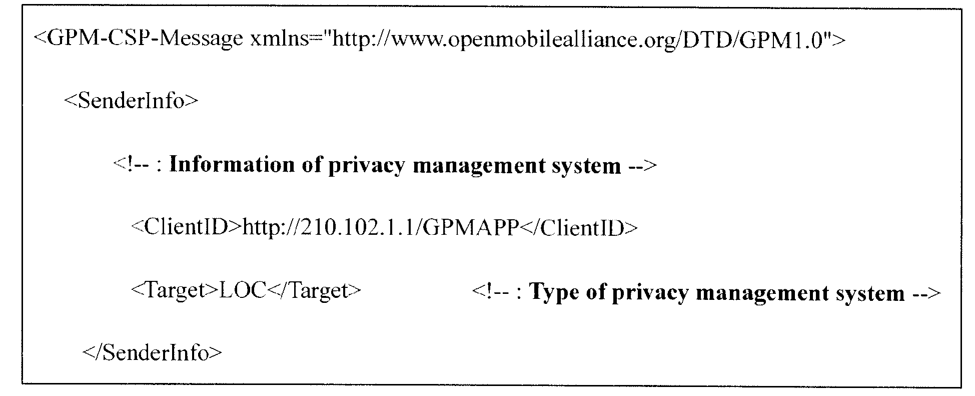

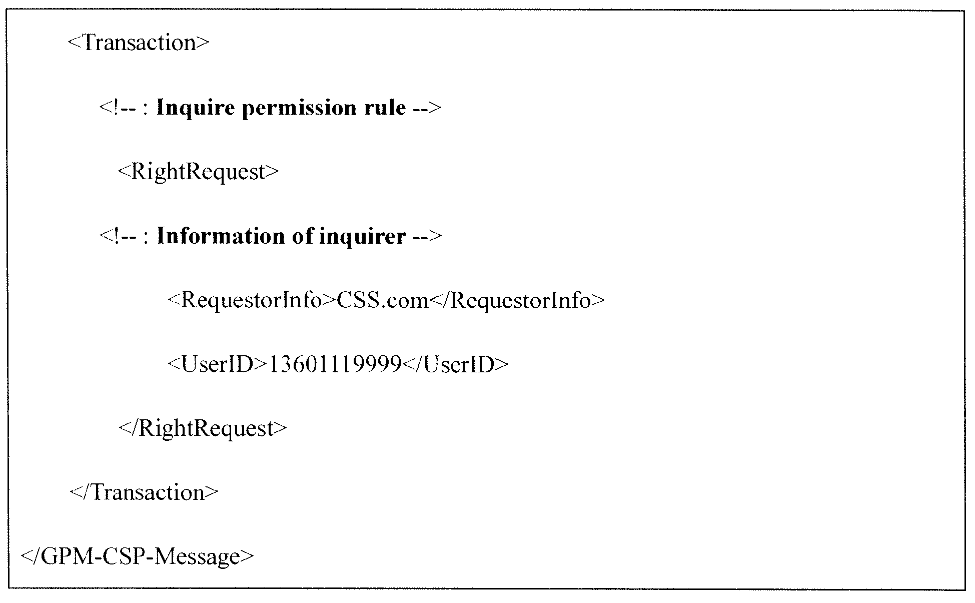

S 13: Upon reception of the message, the authorization management server inquires the permission rule of 13601119999, finds that LOC inquiry is permitted for CSS.com, and returns information of permit.

S14: The location server provides the custom service system with the location information of Bob, Chris and David.

S 15: The custom service system displays the location information of Bob, Chris and David.

S16: Joe chooses an employee nearest to the location designated in the notification ticket, and assigns the task to him.

In the embodiments of the invention, by setting a privacy permission rule for a privacy owner, it can be determined according to the privacy permission rule whether a privacy inquirer is permitted to obtain the privacy owner's privacy when the privacy inquirer inquires the privacy owner's privacy. The privacy owner's privacy is provided to the privacy inquirer only when the privacy inquirer is permitted, and other inquirers that are not permitted cannot obtain the information, thereby effectively ensuring the privacy owner's privacy.

A system and method for authorization management, and an authorization management server according to the invention have been described in detail in the above. The principles and embodiments of the invention have been described herein by employing specific examples. Description to the above embodiments is only used for understanding the method and the core idea of the invention. Meanwhile, for those ordinarily skilled in the art, various modifications and variations can be made to the embodiments and practical implementation based on the idea of the invention. To sum up, the disclosure of the description shall not be considered as a limitation to the invention.

## Claims

1. A system for authorization management, comprising:
a privacy owner terminal, adapted to provide a privacy owner's privacy;
a privacy management system, adapted to obtain the privacy owner's privacy provided by the privacy owner terminal;
a privacy inquiring terminal, adapted to inquire the privacy owner's privacy from the privacy management system and obtain the privacy inquirer's privacy provided by the privacy management system; and
an authorization management server, adapted to determine, according to a predetermined privacy permission rule, whether to permit a privacy inquirer to obtain the privacy owner's privacy when the privacy inquirer inquires the privacy owner's privacy via the privacy inquiring terminal, and send, if a result of permission is permit, the result to the privacy management system,
wherein the privacy management system provides the privacy inquiring terminal with the privacy owner's privacy if the result of permission sent by the authorization management server is permit.

2. The system for authorization management according to claim 1, wherein:
the privacy management system is further adapted to send, upon reception of a privacy inquiring request from the privacy inquiring terminal, the privacy inquiring request to the authorization management server; and
the authorization management server identifies, upon reception of the privacy inquiring request, information of a privacy type, information of a privacy inquirer and information of a privacy owner, and obtains, according to the predetermined privacy permission rule, the result of permission of whether to permit the privacy inquirer to obtain the privacy owner's privacy of the type.

3. The system for authorization management according to claim 1, wherein:
the authorization management server is further adapted to identify, upon interception of a privacy inquiring request sent by the privacy inquiring terminal to the privacy management system, information of a privacy type, information of a privacy inquirer and information of a privacy owner, and obtain, according to the predetermined privacy permission rule, the result of permission of whether to permit the privacy inquirer to obtain the privacy owner's privacy of the type.

4. The system for authorization management according to any one of claims 1 to 3, wherein:
the authorization management server is further adapted to provide the privacy management system with the result or directly notify information of privacy request failure to the privacy inquiring terminal if the result of permission is refusal;
the privacy management system is further adapted to notify, if the result of permission provided by the authorization management server to the privacy management system is refusal, information of privacy request failure to the privacy inquiring terminal; and
the privacy inquiring terminal is further adapted to receive the information of privacy request failure returned by the authorization management server or by the privacy management system.

5. The system for authorization management according to any one of claims 1 to 3, further comprising a permission rule setting terminal adapted to set, in the authorization management server, the privacy permission rule of the privacy owner.

6. The system for authorization management according to any one of claims 1 to 3, further comprising an administrator terminal adapted to set, in the authorization management server, a right of a permission rule setter, wherein the authorization management server is further adapted to store the right set by an administrator for the permission rule setter.

7. The system for authorization management according to any one of claims 1 to 3, wherein the privacy management system is a Location service system or a Presence service system.

8. A method for authorization management, comprising:
determining a privacy permission rule of a privacy owner;
identifying information contained in a privacy inquiring request; and
determining, according to the privacy permission rule and the identified information, whether to release information of the privacy owner's privacy.

9. The method for authorization management according to claim 8, wherein the process of identifying information contained in a privacy inquiring request comprises:
intercepting, by an authorization management server, the privacy inquiring request sent by a privacy inquiring terminal to a privacy management system; and
identifying, by the authorization management server, information of a privacy inquirer, information of a privacy type and information of a privacy owner from the privacy inquiring request; and
the process of determining, according to the privacy permission rule and the identified information, whether to release information of the privacy owner's privacy comprises:
sending, by the authorization management server, a permit-to-release-privacy message to the privacy management system corresponding to the privacy type if the privacy inquirer is permitted, according to the privacy permission rule, to obtain the inquired privacy.

10. The method for authorization management according to claim 8, wherein the process of identifying information contained in a privacy inquiring request comprises:
sending, by a privacy management system, the privacy inquiring request to an authorization management server; and
identifying, by the authorization management server, information of a privacy inquirer, information of a privacy type and information of a privacy owner from the privacy inquiring request; and
the process of determining, according to the privacy permission rule and the identified information, whether to release information of the privacy owner's privacy comprises:
returning, by the authorization management server, a permit-to-release-privacy message to the privacy management system if the privacy inquirer is permitted, according to the privacy permission rule, to obtain the inquired privacy.

11. The method for authorization management according to claim 9 or 10, wherein the process of determining, according to the privacy permission rule and the identified information, whether to release information of the privacy owner's privacy further comprises: if the privacy inquirer is not permitted to obtain the inquired privacy, then returning, by the authorization management server, a privacy request failure message to the privacy inquiring terminal; or returning, by the authorization management server, a refuse-to-release-privacy message to the privacy management system.

12. The method for authorization management according to claim 9 or 10, wherein the information of the privacy owner is a user name or contact details of the privacy owner.

13. The method for authorization management according to claim 8, wherein the process of determining a privacy permission rule of a privacy owner comprises:
sending, by a permission rule setting terminal, to an authorization management server a permission rule setting message of the privacy permission rule; and
storing, by the authorization management server, the privacy permission rule if a privacy permitter possesses a right for setting the rule.

14. The method for authorization management according to claim 13, wherein after the process of storing, by the authorization management server, the privacy permission rule if a privacy permitter possesses a right for setting the rule, the method further comprises: sending, by the authorization management server, to a privacy owner terminal the privacy rule set for the privacy owner.

15. The method for authorization management according to claim 13, wherein before the process of sending, by a permission rule setting terminal, to an authorization management server a permission rule setting message of the privacy permission rule, the method further comprises: setting, by an administrator terminal, the right for the permission rule setter.

16. The method for authorization management according to claim 15, wherein the process of setting, by an administrator terminal, the right for the permission rule setter comprises:
sending, by the administrator terminal, to the authorization management server a right setting request message containing information of the permission rule setter and right setting information; and
setting, by the authorization management server, the right of the permission rule setter according to the right setting information if an administrator possesses a right for setting the right for the permission rule setter.

17. The method for authorization management according to claim 16, wherein after the process of setting, by the authorization management server, the right of the permission rule setter, the method further comprises: sending, by the authorization management server, to the permission rule setting terminal a right update notification.

18. An authorization management server, comprising:
a permission rule storing unit, adapted to store a privacy permission rule of a privacy owner;
an information identifying unit, adapted to identify information contained in a privacy inquiring request and provide a permission inquiring unit with the identified information; and
the permission inquiring unit, adapted to obtain, according to the information provided by the information identifying unit and the privacy permission rule stored in the permission rule storing unit, a result of permission of privacy.

19. The authorization management server according to claim 18, wherein the permission inquiring unit is further adapted to receive a privacy inquiring request containing information of a privacy type, information of a privacy owner and information of a privacy inquirer, and provide the information identifying unit with the inquiring request.

20. The authorization management server according to claim 18, further comprising a message intercepting unit adapted to intercept a privacy inquiring request sent by a privacy inquiring terminal and provide the privacy inquiring request to the information identifying unit,
wherein the information identifying unit is further adapted to identify information of a service type, information of a privacy owner and information of a privacy inquirer from the privacy inquiring request provided by the message intercepting unit; obtain, according to a stored relationship between the information of the service type and information of a privacy type, the information of the privacy type; and submit the information of the privacy type, the information of the privacy owner and the information of the privacy inquirer to the permission inquiring unit.

21. The authorization management server according to any one of claims 18 to 20, further comprising a permission rule processing unit adapted to receive a permission rule setting message, and record, if a permission rule setter possesses a right for setting the rule, the privacy permission rule in the message into the permission rule storing unit.

22. The authorization management server according to any one of claims 18 to 20, wherein the permission rule processing unit is further adapted to receive a right setting request message, and update, if an administrator possesses a right for setting a right for a permission rule setter, in the permission rule storing unit the right of the permission rule setter; and the permission rule storing unit is further adapted for information of the right set for the permission rule setter by the administrator.

23. The authorization management server according to any one of claims 18 to 20, further comprising an authentication unit adapted to return, if information provided by a user during login is consistent with stored login information, to the user a user identifier for confirming the user's right.
